# EUROPÄISCHE PATENTSCHRIFT

(11) **EP 0 596 306 B1**
(45) Veröffentlichungstag und Bekanntmachung des Hinweises auf die Patenterteilung: **24.07.1996**
(21) Anmeldenummer: 93116758.9
(22) Anmeldetag: 16.10.1993
(51) Int. Cl.: B60R 13/02

(54) **Abdeckleiste für eine in ein Fahrzeugdach eingelassene Rinne**
Covering strip for a channel in a vehicle's roof
Baguette encastrée pour une rainure tracée dans le toit d'un véhicule

(30) Priorität: 04.11.1992 DE 4237158
(43) Veröffentlichungstag der Anmeldung: 11.05.1994
(73) Patentinhaber: SCHADE KG, D-58840 Plettenberg (DE)
(72) Erfinder: Ziegert, Martin, D-58840 Plettenberg (DE); Huster, Holger, D-58840 Plettenberg (DE)

(56) Entgegenhaltungen:
- DE-A- 3 306 360
- DE-A- 3 533 749
- DE-A- 3 626 926
- DE-C- 4 213 464
- FR-A- 2 687 964

## Beschreibung

Die Erfindung betrifft eine Abdeckleiste für eine in ein Fahrzeugdach eingelassene Rinne zur Aufnahme und Halterung der Stützfüße eines Dachlastenträgers, die durch Öffnungen der Abdeckleiste greifen, wobei die Öffnungen durch um Lagerstifte schwenkbare mit Federelementen zusammenwirkende Klappen verschließbar sind und die Abdeckleiste rastend an einer in der Rinne befestigten Profilleiste festgelegt ist. Siehe FR-A-2 687 964.

Bei einer aus der Praxis bekannten Ausführung ist die in eine Profilleiste der Rinne eingerastete Abdeckleiste derart winkelförmig ausgebildet, daß sie nur mit einem Profilschenkel in der Rinne rastend festgelegt werden kann. Ein mit diesem Profilschenkel mitverrastetes Federelement arretiert die Klappe. Der Sitz des Federelementes und die Kraftverteilung desselben auf die Abdeckleiste und die Klappe ist bei dieser bekannten Ausführung unzureichend. Außerdem ist die vorbekannte Abdeckleiste kostenaufwendig und montageunfreundlich. Da sie in der Automobilindustrie in sehr großen Stückzahlen eingesetzt wird, wirkt sich bereits eine geringe Stückkostensenkung für die Wirtschaftlichkeit erheblich aus.

Der vorliegenden Erfindung liegt die Aufgabe zugrunde, eine Abdeckleiste mit den Federelementen der gattungsgemäßen Art so auszubilden, daß ihre Halte- und Sicherungsfunktion verbessert sowie eine wesentliche Montagevereinfachung und Kostensenkung erzielt wird.

Diese Aufgabe wird erfindungsgemäß dadurch gelöst, daß jedes Federelement sich zumindest über eine Teillänge desselben erstreckende Sicherungszungen aufweist, daß das freie Ende jeder Sicherungszunge sowohl in der geschlossenen als auch in der geöffneten Stellung jeder Klappe an einer den Lagerstiften zugeordneten Kontaktfläche der Klappe unter Vorspannung anliegt und daß jedes Federelement im Bereich außerhalb der Sicherungszungen die Abdeckklappe in der Schließlage untergreifende Auflageschenkel aufweist.

Da durch den Vorschlag nach der Erfindung nunmehr jedes Federelement ein oder zwei Sicherungszungen aufweist, die in der geöffneten und geschlossenen Stellung der Klappe an deren jeweiliger Kontaktfläche anliegen, sind die Klappen jeder Abdeckleiste in beiden Stellungen sicher arretiert. Ein selbständiges Öffnen der Klappen durch die Sogwirkung des Fahrtwindes mit damit verbundenen Pfeifgeräuschen durch den Wind ist praktisch ausgeschlossen. Da üblicherweise das Fahrzeug ohne Dachlastenträger wesentlich häufiger benutzt wird, als mit aufgesetztem Träger, ist eine zuverlässige Arretierung in der geschlossenen Stellung von besonderer Bedeutung. Wenn jedes Federelement darüberhinaus vorzugsweise zwei Auflageschenkel aufweist, wird in Verbindung mit den Sicherungszungen eine sichere und definierte Auflage für die Klappe erreicht, so daß die Klappenoberfläche mit der anschließenden Abdeckleistenoberfläche fluchtend positioniert ist und im Übergangsbereich keine optisch und von der Geräuschentwicklung durch den Fahrtwind störende Absätze entstehen. Die Sicherungszungen bewirken in der Schließlage, daß die Klappen fest gegen die Auflageschenkel gedrückt werden.

In weiterer bevorzugter Ausgestaltung des Erfindungsgegenstandes ist vorgesehen, daß die Auflageschenkel in den Stirnendbereichen des Federelementes vorgesehen sind und, daß das Federelement zwei Sicherungszungen aufweist, die sich an die Auflageschenkel anschließen. Dadurch wird einerseits erreicht, daß sich die Übergänge der Klappe zu den Außenflächen der Abdeckleiste ohne störende Ansätze ausgestalten lassen. Zum anderen werden durch die Sicherungszungen die die Scharnierachse bildenden Lagerstifte gegen Verschieben zuverlässig gesichert. Damit das Federelement in einfachster Weise festgelegt werden kann, ist zweckmäßig vorgesehen, daß es wenigstens zwei zwischen den Sicherungszungen liegende Andrückstege aufweist, die in eine Aussparung der Abdeckleiste eingreifen und die im Abstand zu den Sicherungszungen liegen, so daß durch den freien Schenkel in Verbindung mit den Andrückstegen eine Rastverbindung entsteht. Dadurch wird es möglich, daß die Abdeckschiene zusammen mit den Klappen, den Federelementen und ggf. auch zwei seitlich angeclipsten Dichtungsstreifen als komplett vormonierte Baueinheit in die Rinne eingesetzt werden kann.

Die Arretierung jeder Klappen in der Offen- und Geschlossenstellung ist besonders wirksam, wenn sie im Bereich der Lagerstifte zwei unter einem spitzen Winkel zueinander stehende Kontaktflächen für jede Sicherungszunge aufweist. Dies ist eine konstruktiv besonders einfache Lösung. Zudem ist dadurch gewährleistet, daß die Schwenkbewegung zum Öffnen und Schließen der Klappe mit geringem Kostenaufwand erfolgen kann.

Der Sitz des Federelementes und die Kraftverteilung auf die Abdeckleiste wird erheblich verbessert, wenn nach einem weiteren Vorschlag der Erfindung die Abdeckleiste im Querschnitt U-förmig ausgebildet ist und deren beide parallele Schenkel zur Verrastung der Abdeckleiste als Profilschenkel ausgebildet sind. Dadurch ist es möglich, die komplett montierte Abdeckleiste an in der Rinne befestigten entsprechend ausgelegten Gegenstücken mit den Profilschenkeln form- und/oder kraftschlüssig zu sichern. Eine besonders sichere Kräfteverteilung wird erreicht, weil die Befestigungskräfte gegenüber der bekannten Ausführung bei der vorliegenden Erfindung auf zwei Stege verteilt sind.

Im folgenden wird anhand der beiliegenden Zeichnungen die Erfindung näher erläutert.

Es zeigen:
- Figur 1:: die in die Rinne des Fahrzeugdaches eingesetzte Abdeckleiste abschnittsweise in Draufsicht,
- Figur 2:: die Klappe mit vormontierten Lagerstiften als Einzelheit in Draufsicht,
- Figur 3:: das Federelement in einer Seitenansicht,
- Figur 4:: das Federelement in einer Draufsicht,
- Figur 5:: einen Schnitt längs der Linie V-V in Figur 4,
- Figur 6:: einen Schnitt längs der Linie VI-VI in Figur 4,
- Figur 7:: einen Schnitt längs der Linie VII-VII in Figur 4,
- Figur 8:: einen Schnitt längs der Linie VIII-VIII in Figur 1,
- Figur 9:: einen Schnitt längs der Linie IX-IX in Figur 1,
- Figur 10:: einen Schnitt längs der Linie X-X in Figur 1 mit geöffneter Klappe,
- Figur 10a:: einen Schnitt längs der Linie X-X in der Figur 1 mit mit geschlossener Klappe und
- Figur 11:: einen Schnitt längs der Linie XI-XI in der Figur 1.

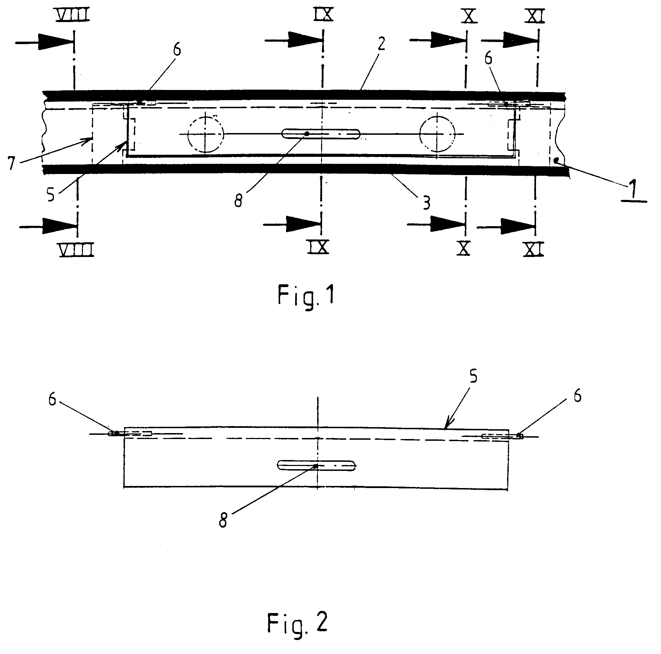

In der Figur 1 sind die seitlichen Begrenzungen der in das Fahrzeugdach eingelassenen Rinne 1 durch die Bezugszeichen 2 und 3 gekennzeichnet. In die Rinne 1 ist eine im folgenden näher erläuterte Abdeckleiste 4 eingeclipst. Die Abdeckleiste 4 weist zwei im Abstand zueinander liegende Öffnungen auf, die jeweils durch eine schwenkbare Klappe 5 verschlossen sind. Zur vereinfachten Darstellung ist in der Figur 1 nur ein Teilstück der Rinne dargestellt, dessen Länge etwas größer ist, als die Abdeckklappe 5, welche stirnseitig mit zwei Lagerstiften 6 ausgerüstet ist, die über die Stirnflächen der Klappe vorstehen und an einer Längsseite angeordnet sind (Figur 2). Der Abdeckleiste 4 ist weiterhin ein als Profilleiste ausgebildetes Federelement 7 zugeordnet, welches ebenfalls durch eine Rastverbindung festgelegt ist. Die Länge des Federelementes 6 ist ein wenig größer als die der Klappe 5, so daß es an beiden Stirnenden gleichmäßig gegenüber der Klappe 5 vorsteht. Die Figur 2 zeigt, daß die Klappe 5 im mittleren Bereich mit einem Langloch 8 versehen ist, durch welches im endgültigen Montagezustand der Abdeckleiste zum Öffnen der Klappe ein Werkzeug eingeführt werden kann.

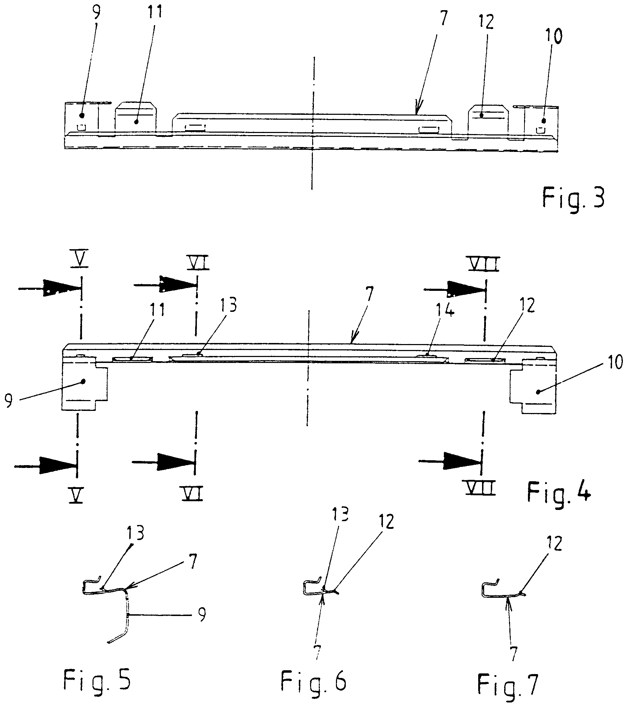

Die Figuren 3 bis 7 zeigen das Federelement 7 als Einzelteil. In seiner Grundform ist das Federelement im Querschnitt U-förmig ausgebildet, wobei der eine der parallelen Schenkel kürzer ist als der andere. In den beiden Stirnendbereichen ist das Federelement mit Auflageschenkeln 9 und 10 versehen, die an dessen längeren Schenkel angeformt sind und die im montierten Zustand die Öffnung der Abdeckleiste 4 begrenzenden Stirnenden sowie die Klappe 5 untergreifen. Die Figur 5 zeigt, daß der freie Rand jedes Auflageschenkels 9,10 nach unten abgewinkelt ist. An die Auflageschenkel 9,10 schließen sich zwei Sicherungszungen 11,12 an, die den oberen Rand des längeren Schenkels des U-förmigen Federelementes 7 darstellen. Die Sicherungszungen 11,12 sind abgewinkelt. Der zwischen den Sicherungszungen 11,12 liegende Bereich des längeren Schenkels des Federelementes 7 springt gegenüber den Sicherungszungen 11,12 zurück. In diesem Bereich weist das Federelement 7 zwei Andrückstege 13,14 auf, die durch Einschnitte und Auslenkungen gebildet sind.

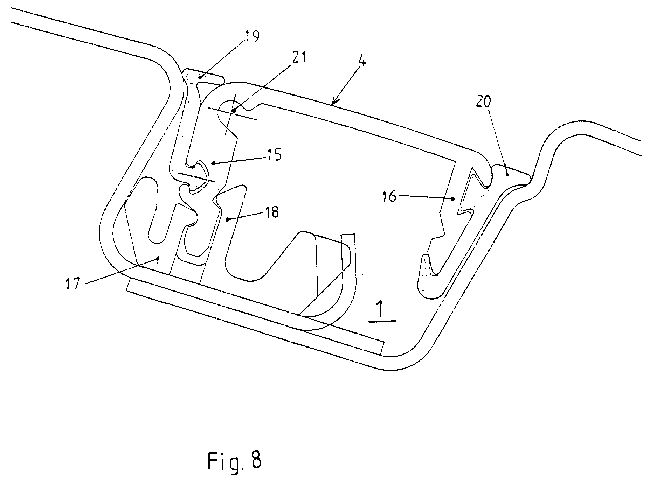

Die Figur 8 zeigt die Festlegung der Abdeckleiste 4 in der Rinne 1. Die Abdeckleiste ist in ihrer Grundform, bezogen auf die Einbaulage umgekehrt U-förmig ausgebildet. Die beiden parallelen Schenkel sind als Profilschenkel 15, 16 ausgebildet. Der in der Darstellung linke Profilschenkel 15 ist in zwei Clipse 17,18 eingerastet, deren Rastnasen höhenversetzt zueinander liegen, um das Einrasten zu erleichtern. An den beiden äußeren Seiten der Profilschenkel 15,16 sind zwei Dichtungsstreifen 19,20 eingerastet, die sich bis in den oberen Rand der Rinne 1 erstrecken. Der den Clipsen 17,18 gegenüberliegende Dichtungsstreifen 20 liegt zur Abstützung der Abdeckleiste 4 auf seiner gesamten Höhe an der Wandung der Rinne 1 an. Die Abdeckleiste 4 ist mit einer etwa halbkreisförmigen Ausnehmung 21 versehen ist, um die klappenstirnseitig vorstehenden Teile der Lagerstifte einrasten zu können.

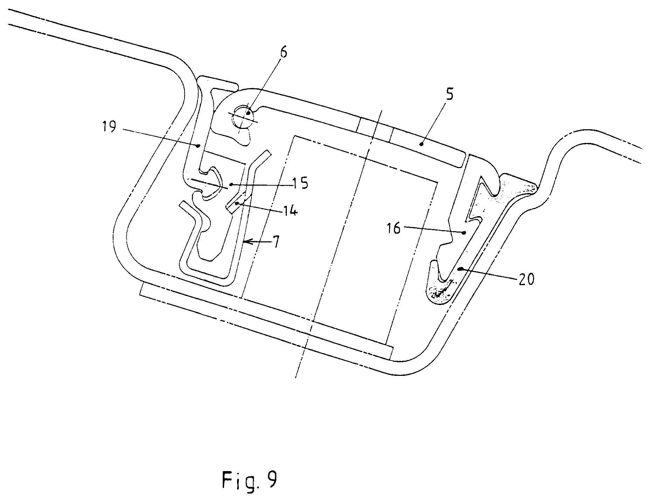

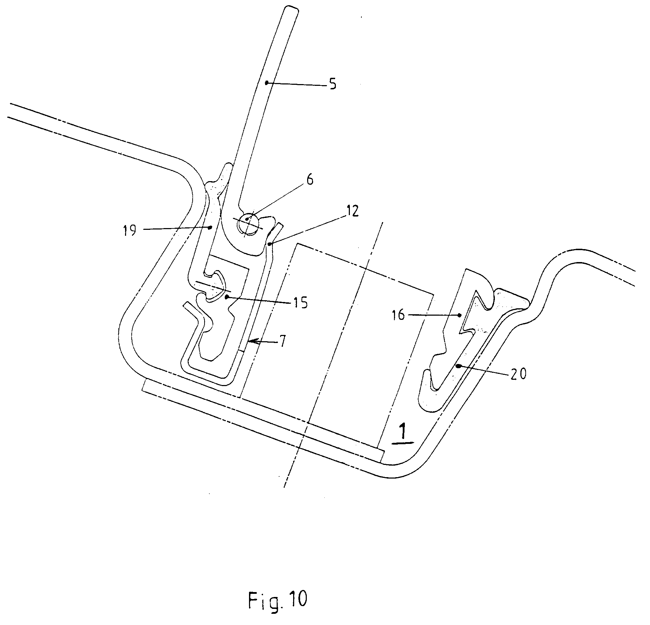

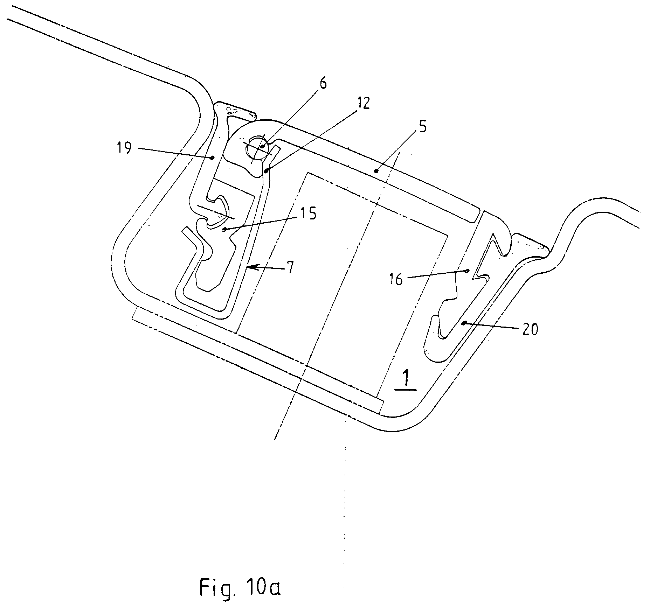

Aus Figur 9 ist ersichtlich, daß die Öffnungen der Abdeckleiste 4 im wesentlichen durch Ausschneiden eines der Größe der Klappe 5 entsprechenden Teiles des Mittelschenkels der Abdeckleiste 4 gebildet ist. In diesem Bereich fehlen die Clipse 17,18, da das Federelement 7 an dem unterhalb der Ausnehmung 21 liegenden Profilschenkel 15 der Abdeckleiste 4 eingerastet ist. Die Klappe 5 ist entsprechend den Figuren 9 bis 10 und 10a in die Öffnung eingesetzt. Dabei verdeutlicht die Figur 9, daß die Klappe im wesentlichen der Kontur des Mittelschenkels der Leiste 4 entspricht, so daß der Übergang von der Klappe zum Mittelschenkel der Abdeckleiste 4 an der oberen Seite glattflächig erfolgt. Aus dieser Figur ergibt sich auch, daß das Federelement 7 praktisch als Klammer ausgebildet und am Profilschenkel 15 in der Abdeckleiste 4 eingerastet ist.

Aus den Figuren 10 und 10a ist ersichtlich, daß das Federelement 7 in den Stirnendbereichen der Klappe 5 mit Sicherungszungen 11,12 versehen ist, die durch Verlängerungen des längeren Schenkels gebildet sind. Diese Sicherungszungen liegen bei geöffneter und geschlossener Klappe an Kontaktflächen der Klappe 5 an, so daß die Klappe in jeder Stellung arretiert ist. Die Kontaktflächen sind Teil des Randes, in dem die Ausnehmungen zum Einrasten der Lagerstifte 6 der Klappe vorgesehen sind. Aus der Figur 10 ergibt sich außerdem, daß bei geöffneter Klappe ein abgewinkelter oberer, den Sicherungszungen 11,12 zugeordneter Rand des Dichtungsstreifens 19 beim Öffnen der Klappe 5 verformt wird, so daß durch die Rückstellkräfte in Verbindung mit den Sicherungszungen die Klappe exakt fixiert ist.

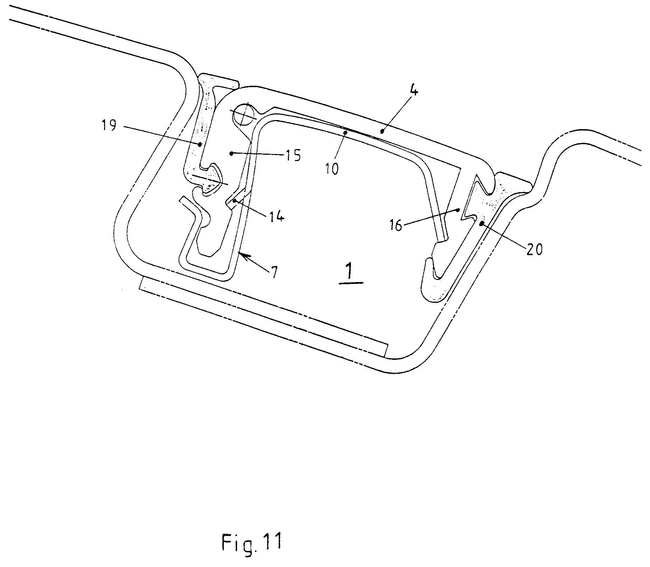

Die Figur 11 zeigt, daß in beiden Endbereichen das Federelement 7 mit Auflageschenkeln 9,10 versehen ist, die sinngemäß eine verlängerte Abwinkelung des längeren Schenkels sind. Diese Auflageschenkel 9,10 untergreifen beide Stirnenden der Klappe 5 und die angrenzenden Randbereiche der Abdeckleiste 4 so, daß die Schließlage der Klappe exakt fixiert ist. Die Sicherungszungen 11,12 und die Auflageschenkel 9,10 liegen in einem relativ geringen Abstand zueinander. Das Federelement 7 ist nach Art einer Klammer ausgebildet und aus einem Federstahlblech von relativ geringer Dicke gefertigt. Aus der Zeichnung ergibt sich, daß die Klappen 5 im Wege der Vormontage leicht von unten her in die Abdeckleiste 4 eingesetzt werden können. Die komplett montierte Abdeckleiste einschließlich der angesetzten Dichtungsstreifen kann in die Rinne 1 eingesetzt werden. Die Klappe 5 ist ein einstückiges Kunststofform teil.

### Stückliste

- 1: Rinne
- 2,3: seitliche Begrenzungen
- 4: Abdeckleiste
- 5: Klappe
- 6: Lagerstifte
- 7: Federelement
- 8: Langloch
- 9,10: Auflageschenkel
- 11,12: Sicherungszungen
- 13,14: Andrückstege
- 15,16: Profilschenkel
- 17,18: Clipse
- 19,20: Dichtungsstreifen
- 21: Ausnehmung

## Patentansprüche

1. Abdeckleiste für eine in ein Fahrzeugdach eingelassene Rinne (1) zur Aufnahme und Halterung der Stützfüße eines Dachlastenträgers, die durch Öffnungen der Abdeckleiste (4) greifen, wobei die Öffnungen durch um Lagerstifte (6) schwenkbare mit Federelementen (7) zusammenwirkende Klappen (5) verschließbar sind und die Abdeckleiste (4) rastend an einer in der Rinne (1) befestigten Profilleiste (19,20) festgelegt ist, dadurch gekennzeichnet, daß jedes Federelement (7) sich zumindest über eine Teillänge desselben erstreckende Sicherungszungen (11,12) aufweist, daß das freie Ende jeder Sicherungszunge (11,12) sowohl in der geschlossenen als auch in der geöffneten Stellung jeder Klappe (5) an einer den Lagerstiften (6) zugeordneten Kontaktfläche der Klappe (5) unter Vorspannung anliegt und daß jedes Federelement (7) im Bereich außerhalb der Sicherungszungen (11,12) die Abdeckklappe (5) in der Schließlage untergreifende Auflageschenkel (9,10) aufweist.

2. Abdeckleiste nach Anspruch 1, dadurch gekennzeichnet, daß die Auflageschenkel (9,10) in den Stirnendbereichen des Federelementes (7) vorgesehen sind, und daß das Federelement zwei Sicherungszungen (11,12) aufweist, die sich an die Auflageschenkel (9,10) anschließen.

3. Abdeckleiste nach Anspruch 2, dadurch gekennzeichnet, daß das Federelement (7) wenigstens zwei zwischen den Sicherungszungen (11,12) liegende Andrückstege (13,14) aufweist, die in eine Aussparung der Abdeckleiste (4) eingreifen und die im Abstand zu den Sicherungszungen (11,12) liegen.

4. Abdeckleiste nach Anspruch 1, dadurch gekennzeichnet, daß die Klappe (5) unter einem spitzen Winkel zueinander stehende Kontaktflächen für jede Sicherungszunge (11 bzw. 12) aufweist.

5. Abdeckleiste nach Anspruch 1, dadurch gekennzeichnet, daß die Abdeckleiste (4) im Querschnitt U-förmig ausgebildet ist und deren beide parallele Schenkel zur Verrastung der Abdeckleiste als Profilschenkel ausgestaltet sind.

6. Abdeckleiste nach Anspruch 5, dadurch gekennzeichnet, daß dem unterhalb der Schwenkachse der Klappe (5) liegenden Profilschenkel (15) der Abdeckleiste (4) das als Profilschiene ausgebildete Federelement (7) zugeordnet ist, und daß der Profilschenkel außerhalb des Federelementes (7) rastend in die in die Rinne eingesetzten Clipse, (17,18) eingreift.

7. Abdeckleiste nach Anspruch 6, dadurch gekennzeichnet, daß die Profilschenkel (15,16) der Abdeckleiste (4) mit Profildichtungen (19,20) zusammenwirken.

## Claims

1. Cover strip for a channel (1) recessed into a vehicle roof and intended for receiving and holding the supporting feet of a roof-rack, which feet engage through openings in the cover strip (4), the openings being closable by flaps (5) which can be pivoted around bearing pins (6) and interact with spring elements (7) and the cover strip (4) being secured in a latching manner on a profile strip (19, 20) fastened in the channel (1), characterized in that each spring element (7) has securing tongues (11, 12) extending at least over part of the length thereof, in that the free end of each securing tongue (11, 12) bears, both in the closed and in the open position of each flap (5), with prestressing against a contact face, assigned to the bearing pins (6), of the flap (5), and in that each spring element (7) has, in the region outside the securing tongues (11, 12), supporting legs (9, 10) which engage underneath the cover flap (5) in the closed position.

2. Cover strip according to Claim 1, characterized in that the supporting legs (9, 10) are provided in the end regions of the spring element (7), and in that the spring element has two securing tongues (11, 12) which adjoin the supporting legs (9, 10).

3. Cover strip according to Claim 2, characterized in that the spring element (7) has at least two press-on webs (13, 14) which lie between the securing tongues (11, 12), engage in a cutout in the cover strip (4) and lie at a distance from the securing tongues (11, 12).

4. Cover strip according to Claim 1, characterized in that the flap (5) has contact faces, which are at an acute angle with respect to one another, for each securing tongue (11 or 12).

5. Cover strip according to Claim 1, characterized in that the cover strip (4) is of U-shaped design in cross-section and its two parallel legs are configured as profile legs for the latching of the cover strip.

6. Cover strip according to Claim 5, characterized in that the spring element (7) which is designed as a profile rail is assigned to that profile leg (15) of the cover strip (4) which lies underneath the pivot axis of the flap (5), and in that the profile leg outside the spring element (7) engages in a latching manner in the clips (17, 18) inserted into the channel.

7. Cover strip according to Claim 6, characterized in that the profile legs (15, 16) of the cover strip (4) interact with profile seals (19, 20).

## Revendications

1. Baguette de fermeture par une rainure (1) ménagée dans un toit de véhicule pour recevoir et retenir les pieds d'appui d'un support de charge de toit qui s'engagent à travers des ouvertures de la baguette de fermeture (4), les ouvertures pouvant être fermées par des rabats (5) qui peuvent basculer autour d'axes d'articulation (6) et coopèrent avec des éléments élastiques (7), et la baguette de fermeture (4) étant fixée à encliquetage à une baguette profilée (19, 20) fixée dans la rainure (1), caractérisée en ce que chaque élément élastique (7) présente des languettes d'arrêt (11, 12) s'étendant au moins sur une longueur partielle de cet élément, en ce que l'extrémité libre de chaque languette d'arrêt (11, 12) s'appuie avec précontrainte contre une surface de contact du rabat associée à l'un des axes d'articulation (6), aussi bien dans la position fermée que dans la position ouverte de chaque rabat (5) et que l'élément élastique (7) présente, dans la région située en dehors des languettes d'arrêt (11, 12), des branches d'appui (9, 10) qui s'accrochent sous le rabat (5) de fermeture dans la position de fermeture.

2. Baguette de fermeture selon la revendication 1, caractérisée en ce que les branches d'appui (9, 10) sont prévues dans les régions d'extrémité frontales de l'élément élastique (7) et en ce que l'élément élastique présente deux languettes d'arrêt (11, 12) qui font suite aux branches d'appui (9, 10).

3. Baguette de fermeture selon la revendication 2, caractérisée en ce que l'élément élastique (7) présente au moins deux nervures de pression (13, 14) situées entre les languettes d'arrêt (11, 12), qui s'engagent dans un évidement de la baguette de fermeture (4) et qui se trouvent à distance des languettes d'arrêt (11, 12).

4. Baguette de fermeture selon la revendication 1, caractérisée en ce que, pour chaque languette d'arrêt (11 ou 12), le rabat (5) présente des surfaces de contact, formant un angle aigu entre elles.

5. Baguette de fermeture selon la revendication 1, caractérisée en ce que la baguette de fermeture (4) est en forme de U en section transversale et en ce que ses deux branches parallèles présentent la forme de branches profilées pour l'encliquetage de la baguette de fermeture.

6. Baguette de fermeture selon la revendication 5, caractérisée en ce qu'à la branche profilée (15) qui se trouve au-dessous de l'axe de rabattement du rabat (5), un élément élastique (7) constitué par un profilé est associé à la baguette de fermeture (4) et en ce que la branche profilée s'engage par encliquetage dans les pinces (17, 18) encastrées dans la rainure, en dehors de l'élément élastique (7).

7. Baguette de fermeture selon la revendication 6, caractérisée en ce que les branches profilées (15, 16) de la baguette de fermeture (4) coopèrent avec des garnitures d'étanchéité profilées (19, 20).
